# EUROPÄISCHE PATENTSCHRIFT

(11) **EP 0 902 214 B1**
(45) Veröffentlichungstag und Bekanntmachung des Hinweises auf die Patenterteilung: **02.05.2003**
(21) Anmeldenummer: 98116352.0
(22) Anmeldetag: 28.08.1998
(51) Int. Cl.: F16H 59/04

(54) **Schalteinrichtung zur manuellen Betätigung eines Schaltgetriebes**
Gear shift device for manual control of a gearbox
Dispositif de commande manuelle pour une boîte de vitesses

(30) Priorität: 10.09.1997 DE 19739632
(43) Veröffentlichungstag der Anmeldung: 17.03.1999
(73) Patentinhaber: Volkswagen Aktiengesellschaft, 38436 Wolfsburg (DE)
(72) Erfinder: Ahrens, Gerald, 38165 Lehre (DE)

(56) Entgegenhaltungen:
- EP-A- 0 690 246
- GB-A- 2 294 303
- PATENT ABSTRACTS OF JAPAN vol. 009, no. 304 (P-409), 30. November 1985 (1985-11-30) & JP 60 136817 A (NIPPON CABLE SYSTEM KK), 20. Juli 1985 (1985-07-20)

## Beschreibung

Die Erfindung betrifft eine Schalteinrichtung zur manuellen Betätigung eines Schaltgetriebes gemäß dem Oberbegriff des Anspruchs 1.

Aus der DE-OS-29 19 062, der DE-OS-27 46 403 und der DE-OS-31 00 504 sind Schalteinrichtungen zur manuellen Betätigung eines Schaltgetriebes bekannt, wobei ein Schalthebel an zwei voneinander getrennten Gelenken mit zueinander senkrecht stehenden Drehachsen gelagert ist. Derartige Schalteinrichtungen haben den Nachteil eines mechanisch komplizierten und damit kostenintensiven Aufbaus.

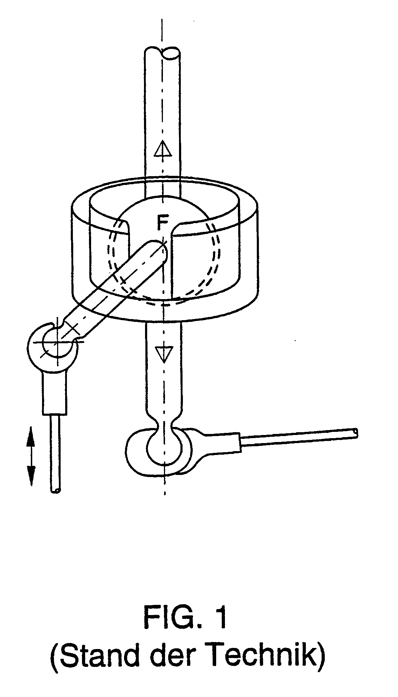

Daher wurde ein Schalthebel mit einer Kugellagerung vorgeschlagen, wie in Fig. 1 dargestellt. Hierbei bildet das Kugellager zwei Drehachsen zur Betätigung von Schaltelementen, wie Seilzügen oder Schaltstangen. Diese Anordnung hat jedoch den Nachteil, daß bei bestimmten Betätigung des Schalthebels das Kugellager in eine Ausknöpfrichtung belastet wird, d.h. eine Kugel der Kugellagerung springt bei ausreichend großer Kraftwirkung aus einem Lager heraus. Das Kugelgelenk dieser in Fig. 1 dargestellten Schalteinrichtung muß deshalb derart ausgelegt sein, daß bei üblicherweise zu erwartenden Belastungen in Ausknöpfrichtung ein unbeabsichtigtes Ausknöpfen der Kugel wirksam verhindert ist. Dies führt jedoch zu zusätzlichen Kosten und aufgrund einer erforderlichen größeren Dimensionierung des Kugellagers zu einem großen Bauraumbedarf.

Die EP 0 690 246 A2 beschreibt einen Fembedienmechanismus, bei dem ein Schalthebel an seinem unteren Ende einen Schaltblock aufweist, der eine Schale für ein Kugelgelenk bildet. Diese Schale sitzt auf einer stationär gehaltenen Kugel, wodurch für die Bewegung des Schaltblockes zwei senkrecht zueinander stehende Schwenkachsen ausgebildet sind. An dem Schaltblock ist ein zweites Kugelgelenk vorgesehen, über welches ein schwenkbares Betätigungselement für eine Getriebeschaltung mit dem Schaltblock verbunden ist. Ein weiteres Betätigungselement für die Getriebeschaltung ist direkt mit dem Schaltblock verbunden. Diese Schalthebelanordnung ist jedoch konstruktiv aufwendig.

Der Erfindung liegt die Aufgabe zugrunde, eine verbesserte Schalteinrichtung der obengenannten Art zur Verfügung zu stellen, welche die oben genannten Nachteile überwindet und ein funktionssicheres Schalten eines Schaltgetriebes gewährleistet.

Diese Aufgabe wird erfindungsgemäß durch eine Schalteinrichtung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist erfindungsgemäß vorgesehen, daß eine Lagerstange mittig mit der Kugel verbunden ist und sich durch zwei Öffnungen der Lagerschale erstreckt, wobei die Lagerstange in Mittelstellung des Schalthebels in die Ausknöpfrichtung ausgerichtet ist. Eine vorteilhafte Ausgestaltung kann z. B. darin bestehen, daß an einem ersten Ende der Lagerstange der Schalthebel und eine zweite Lagerstange befestigt sind und an einem gegenüberliegenden Ende der Lagerstange ein erstes Betätigungsmittel befestigt ist, wobei an der zweiten Lagerstange z. B. ein zweites Betätigungselement befestigt sein kann.

Dies hat den Vorteil, daß das Kugelgelenk zu keinem Zeitpunkt der Betätigung des Schalthebels in Ausknöpfrichtung belastet wird, da die Richtungen der auftretenden Kraftvektoren immer auf die Lagerfläche der Lagerschale weisen.

In einer besonders bevorzugten Ausführungsform ist die Lagerschale ein oder mehrteilig ausgebildet.

Eine besonders einfache und wirkungsvolle Anordnung erzielt man dadurch, daß eine Wirklinie des Schalthebels in jeder Betätigungsstellung desselben die Lagerfläche bzw. die Lagerschale schneidet.

In einer besonders bevorzugten Ausführungsform sind an zwei gegenüberliegenden Stellen der Lagerschale in Ausknöpfrichtung miteinander fluchtende Öffnungen ausgebildet, wobei bevorzugt eine Drehachse für ein Betätigungselement durch die Öffnungen verläuft.

Zweckmäßigerweise sind die wenigstens zwei Betätigungselemente Schaltstangen oder auf Zug und Druck belastbare Seilzüge.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: ein Kugellager eines Schalthebels gemäß dem Stand der Technik in perspektivischer Ansicht und
- Fig. 2: eine bevorzugte Ausführungsform einer -erfindungsgemäßen Schalteinrichtung in perspektivischer Ansicht.

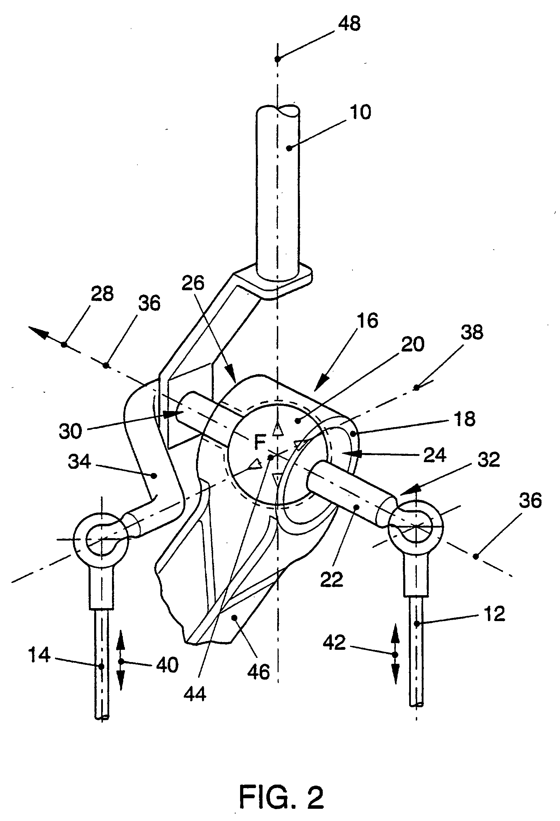

Die in Figur 2 dargestellte bevorzugte Ausführungsform einer erfindungsgemäßen Schalteinrichtung umfaßt einen Schalthebel 10, zwei Betätigungselemente 12 und 14 und ein Kugellager 16. Das Kugellager 16 umfaßt eine Lagerschale 18 und eine Kugel 20. Die Lagerschale 18 ist von einer Kugelgelenkhalterung 46 fixiert gehaltert. Eine erste Lagerstange 22 ist mittig mit der Kugel 20 und an einer ersten Seite 30 mit dem Schalthebel 10 und an einer gegenüberliegenden zweiten Seite 32 mit dem Betätigungselement 12 verbunden. Die Lagerstange 22 erstreckt sich durch zwei Öffnungen 24 und 26 der Lagerschale und ist in Mittelstellung des Schalthebels 10 in eine Ausknöpfrichtung 28 ausgerichtet. An der ersten Seite 30 ist die Lagerstange 22 und der Schalthebel 10 mit einer zweiten Lagerstange 34 verbunden, welche ferner mit dem zweiten Betätigungselement 14 verbunden ist.

Durch betätigen des Schalthebels 10 erfolgt eine entsprechende Drehung des Kugellagers 16 um Drehachsen 36 und 38. Hierbei wird bei Drehung um die Drehachse 36 das zweite Betätigungselement 14 in Pfeilrichtung 40 bewegt und bei Drehung um die Drehachse 38 wird das erste Betätigungselement 12 in Pfeilrichtung 42 bewegt. Hierbei ergeben sich im Kugellager entsprechende Kräfte F, die mit Kraftrichtungspfeilen 44 angedeutet sind.

Wie sich unmittelbar aus der Darstellung ergibt, weisen die Kraftrichtungspfeile 44 niemals in die Ausknöpfrichtung 28. Daher ist durch die erfindungsgemäße Anordnung gewährleistet, daß das Kugelgelenk 16 bei Betätigung des Schalthebels zu keiner Zeit bzw. in keiner Stellung des Schalthebels in Ausknöpfrichtung 28 belastet ist oder, mit anderen Worten, ist der Kraftvektor 44 im Kugelgelenk 16 ausgehend von einem Mittelpunkt der Kugel 20 bei jeder Betätigung des Schalthebels 10 immer auf die Lagerfläche der Lagerschale 18 hin gerichtet.

Die Besonderheit der Anordnung besteht insbesondere darin, daß die vom Kugelgelenk 16 zur Betätigung der Betätigungselemente 12, 14 gebildete Drehachsen 36, 38 eine Ebene im Raum aufspannen, welche, insbesondere in Mittelstellung des Schalthebels, parallel zur Ausknöpfrichtung 28 ist oder einen vorbestimmten Winkel zur Ausknöpfrichtung von größer oder kleiner 90 Grad aufweist.

Es ist alternativ auch möglich, die Anordnung von Schaltstange 10, Kugelgelenk 16 und Betätigungselementen derart zu wählen, daß eine Wirklinie 48 des Schalthebels 10 in jeder Betätigungsstellung desselben die Lagerfläche bzw. die Lagerschale 18 schneidet.

### BEZUGSZEICHENLISTE

- 10: Schalthebel
- 12: erstes Betätigungselement
- 14: zweites Betätigungselement
- 16: Kugellager
- 18: Lagerschale
- 20: Kugel
- 22: Lagerstange
- 24: Öffnung
- 26: Öffnung
- 28: Ausknöpfrichtung
- 30: ersten Seite der ersten Lagerstange
- 32: zweite Seite der ersten Lagerstange
- 34: zweiten Lagerstange
- 36: Drehachse
- 38: Drehachse
- 40: Pfeilrichtung
- 42: Pfeilrichtung
- 44: Kraftrichtungspfeil
- 46: Kugelgelenkhalterung
- 48: Wirklinie

## Patentansprüche

1. Schalteinrichtung, die zur manuellen Betätigung eines Schaltgetriebes, insbesondere eines Kraftfahrzeuges, geignet ist, mit einem Schalthebel (10), welcher über ein Kugellager (16) mit wenigstens zwei Betätigungselementen (12, 14) verbunden ist, wobei das Kugellager (16) eine in einer Lagerschale (18) gelagerte Kugel (20), welche sich an einer Lagerfläche der Lagerschale (18) abstützt, aufweist, die Kugel (20) in einer vorbestimmten Ausknöpfrichtung (28) aus der Lagerschale ausknöpfbar ist und der Schalthebel (10) derart angeordnet ist, daß ein bei der Betätigung des Schalthebels (10) im Kugelgelenk (16) auftretender Kraftvektor (44) vom Mittelpunkt der Kugel (20) immer auf die Lagerfläche der Lagerschale (18) hin gerichtet ist, **dadurch gekennzeichnet, daß** eine Lagerstange (22) mittig mit der Kugel (20) verbunden ist und sich durch zwei Öffnungen (24, 26) der Lagerschale (18) erstreckt, wobei die Lagerstange (22) in Mittelstellung des Schalthebels (10) in die Ausknöpfrichtung (28) ausgerichtet ist.

2. Schalteinrichtung nach Anspruch 1, **dadurch gekennzeichnet, daß** die Lagerschale (18) ein oder mehrteilig ist.

3. Schalteinrichtung nach Anspruch 1 oder 2, **dadurch gekennzeichnet, daß** die Öffnungen (24, 26) an zwei gegenüberliegenden Stellen der Lagerschale (18) in Ausknöpfrichtung (28) miteinander fluchtend ausgebildet sind.

4. Schalteinrichtung nach einem der Ansprüche 1 bis 3, **dadurch gekennzeichnet, daß** die wenigstens zwei Betätigungselemente (12, 14) Schaltstangen oder auf Zug und Druck belastbare Seilzüge sind.

5. Schalteinrichtung nach mindestens einem der Ansprüche 1 bis 4, **dadurch gekennzeichnet, daß** an einer ersten Seite (30) der Lagerstange (22) der Schalthebel (10) und eine zweite Lagerstange (34) befestigt sind und an einer gegenüber liegenden zweiten Seite (32) der Lagerstange (22) das erste Betätigungselement (12) befestigt ist.

6. Schalteinrichtung nach Anspruch 5, **dadurch gekennzeichnet, daß** die zweite Lagerstange mit dem zweiten Betätigungselement (14) verbunden ist.

## Claims

1. Shift device which is suitable for manual actuation of a gearbox, in particular of a motor vehicle, having a shift lever (10) which is connected to at least two actuating elements (12, 14) via a ball bearing (16), the ball bearing (16) having a ball (20) which is mounted in a bearing shell (18) and is supported on a bearing surface of the bearing shell (18), the ball (20) being disengageable from the bearing shell in a predetermined disengaging direction (28), and the shift lever (10) being arranged in such a manner that a force vector (44) which occurs in the ball-and-socket joint (16) when the shift lever (10) is actuated is always directed from the central point of the ball (20) towards the bearing surface of the bearing shell (18), **characterized in that** a bearing rod (22) is connected centrally to the ball (20) and extends through two openings (24, 26) of the bearing shell (18), the bearing rod (22) being aligned in the disengaging direction (28) in the central position of the shift lever (10).

2. Shift device according to Claim 1, **characterized in that** the bearing shell (18) is of a single part or of a number of parts.

3. Shift device according to Claim 1 or 2, **characterized in that** the openings (24, 26) are formed in alignment with each other in the disengaging direction (28) at two opposite points on the bearing shell (18).

4. Shift device according to one of Claims 1 to 3, **characterized in that** the at least two actuating elements (12, 14) are shift rods or shift cables which can be loaded under tension and compression.

5. Shift device according to at least one of Claims 1 to 4, **characterized in that** the shift lever (10) and a second bearing rod (34) are fastened on a first side (30) of the bearing rod (22) and the first actuating element (12) is fastened on an opposite, second side (32) of the bearing rod (22).

6. Shift device according to Claim 5, **characterized in that** the second bearing rod is connected to the second actuating element (14).

## Revendications

1. Dispositif de changement de vitesse approprié pour la commande manuelle d'une boîte de vitesses, notamment d'un véhicule automobile, comprenant un levier de sélection (10) qui est connecté par le biais d'un palier à bille (16) à au moins deux éléments de commande (12, 14), le palier à bille (16) présentant une bille (20) montée dans une coquille de palier (18), qui s'appuie sur une surface d'appui de la coquille de palier (18), la bille (20) pouvant être extraite de la coquille de palier dans une direction d'extraction prédéfinie (28), et le levier de sélection (10) étant disposé de telle sorte qu'un vecteur de force (44) apparaissant dans l'articulation sphérique (16) lors de la commande du levier de sélection (10) soit orienté depuis le centre de la bille (20) toujours vers la surface d'appui de la coquille de palier (18), **caractérisé en ce qu**'une tige de palier (22) est connectée centralement à la bille (20) et s'étend à travers deux ouvertures (24, 26) de la coquille de palier (18), la tige de palier (22) étant orientée dans la direction d'extraction (28) dans la position intermédiaire du levier de sélection (10).

2. Dispositif de changement de vitesse selon la revendication 1, **caractérisé en ce que** la coquille de palier (18) est réalisée en une ou en plusieurs parties.

3. Dispositif de changement de vitesse selon la revendication 1 ou 2, **caractérisé en ce que** les ouvertures (24, 26) sont réalisées sur deux emplacements opposés de la coquille de palier (18) en alignement l'une avec l'autre dans la direction d'extraction (28).

4. Dispositif de changement de vitesse selon l'une quelconque des revendications 1 à 3, **caractérisé en ce que** les au moins deux éléments de commande (12, 14) sont des tiges de sélection ou des commandes par câbles pouvant être sollicitées en traction et en compression.

5. Dispositif de changement de vitesse selon au moins l'une des revendications 1 à 4, **caractérisé en ce que** le levier de sélection (10) et une deuxième tige de palier (34) sont fixés sur un premier côté (30) de la tige de palier (22) et le premier élément de commande (12) est fixé sur un deuxième côté opposé (32) de la tige de palier (22).

6. Dispositif de changement de vitesse selon la revendication 5, **caractérisé en ce que** la deuxième tige de palier est connectée au deuxième élément de commande (14).
